# EUROPEAN PATENT SPECIFICATION

(11) **EP 2 392 115 B1**
(45) Date of publication and mention of the grant of the patent: **28.12.2016**
(21) Application number: 10702757.5
(22) Date of filing: 20.01.2010
(51) Int. Cl.: H04L 29/06, H04N 21/214, H04N 21/258, H04N 21/436, H04N 21/4623, H04N 21/475, H04N 21/61, H04N 21/643, H04W 8/04, H04W 12/06, H04N 21/462

(54) **METHOD AND USER EQUIPMENT FOR FACILITATING SERVICE PROVISION**
VERFAHREN UND BENUTZERGERÄT ZUR ERLEICHTERUNG VON DIENSTBEREITSTELLUNG
PROCÉDÉ ET ÉQUIPEMENT UTILISATEUR POUR FACILITER LA FOURNITURE DE SERVICES

(30) Priority: 02.02.2009 US 149128 P; 09.07.2009 US 499881
(43) Date of publication of application: 07.12.2011
(73) Proprietor: Telefonaktiebolaget LM Ericsson (publ), 164 83 Stockholm (SE)
(72) Inventor: FOTI, George, Dollard des Ormeaux, Québec H9G 2Z8 (CA); MITRA, Nilo, New York, New York 10025 (US)
(74) Representative: Hoffmann Eitle
(86) International application number: PCT/IB2010/050261
(87) International publication number: WO 2010/086764

(56) References cited:
- EP-A1- 1 895 440
- WO-A1-2007/131548
- DE-A1- 10 238 928
- US-A1- 2007 140 493
- US-A1- 2008 010 380
- US-A1- 2008 066 130

## Description

### Technical Field

The present invention relates to the area of service provision and service subscriptions for users of telecommunications networks.

### Background

As the level of technology increases, the options for communications have become more varied. For example, in the last 30 years in the telecommunications industry, personal communications have evolved from a home having a single rotary dial telephone, to a home having multiple telephones, cable and/or fiber optic lines that accommodate both voice and data. Additionally, cellular phones and Wi-Fi have added a mobile element to communications. Similarly, in the entertainment industry, 30 years ago there was only one format for television and this format was transmitted over the air and received via antennas located at homes. This has evolved into both different standards of picture quality such as, standard definition TV (SDTV), enhanced definition TV (EDTV) and high definition TV (HDTV), and more systems for delivery of these different television display formats such as cable and satellite. Additionally, services have grown to become overlapping between these two industries. As these systems continue to evolve in both industries, the service offerings will continue to merge and new services can be expected to be available for consumers. These services will also be based on the technical capability to process and output more information, for example as seen in the improvements in the picture quality of programs viewed on televisions, and therefore it is expected that service delivery requirements will continue to rely on more bandwidth being available throughout the network.

Another related technology that impacts both the communications and entertainment industries is the Internet. The physical structures of the Internet and associated communication streams have also evolved to handle an increased flow of data. Servers have more memory than ever before, communications links exist that have a higher bandwidth than in the past, processors are faster and more capable and protocols exist to take advantage of these elements. As consumers' usage of the Internet grows, service companies have turned to the Internet (and other Internet Protocol (IP) networks) as a mechanism for providing traditional services, such as for example television services.

These multimedia services include IP television (IPTV, referring to systems or services that deliver television programs over a network using IP data packets), video on demand (VOD), voice over IP (VoIP), and other web related services received singly or bundled together.

To accommodate the new and different ways in which IP networks are being used to provide various services, new network architectures are being developed and standardized. For example, the Internet Multimedia Subsystem (IMS) is an architectural framework utilized for delivering IP multimedia services to an end user. The IMS architecture has evolved into a service-independent topology which uses IP protocols, e.g., Session Initiation Protocol (SIP) signaling, to provide a convergence mechanism for disparate systems. In part, this is accomplished via the provision of a horizontal control layer which isolates the access network from the service layer. Among other things, IMS architectures provide a useful platform for the rollout of IPTV systems and services.

One device associated with the provision of IPTV service within a residence is an Internet Protocol Television Terminal Function (ITF). The ITF is the functionality in the user equipment, such as a set-top box (STB), integrated TV/STB, personal computer, mobile telephone, or other user device, that enables IPTV media information to be selected and displayed to a user. When equipped with suitable capabilities, such as described by the Open IPTV Forum specifications, ITFs allow users to create IMS sessions with an IMS network, after which they are able to access IPTV and other services (based upon, for example, their authorization/service agreements). However, it is also possible for a user to subscribe to IMS services, without necessarily having IPTV service.

IMS is defined, for example, in the specification 3GPP (3^{rd} Generation Partnership Project) TS 23.228 v7.4.0 (2006-06) '3rd Generation Partnership Project; Technical Specification Group Services and System Aspects; IP Multimedia Subsystem (IMS); Stage 2 (Release 7)', which provides service descriptions for the IMS core network. The IMS core network in turn includes elements necessary to support IP multimedia services. Another IMS specification 3GPP TS 33.203 v7.2.0 (2006-06) '3rd Generation Partnership Project; Technical Specification Group Services and System Aspects; 3G security; Access security for IP-based services (Release 7)' provides authentication mechanisms that are useful in ensuring validity of requests received from terminals for obtaining multimedia services such as IPTV. Both are herein included by reference in their entirety.

In IPTV, the ITF is the device capable of rendering television content to one or more users, and interacting with at least an IMS network. An ITF may comprise, for example, a 'set-top box' (STB), having a network interface and outputting video and audio to a television monitor. As another example, an ITF may comprise a television including integral network interface circuits. When a user of an IMS-based IPTV service registers through an ITF with an IMS network, an IPTV Application Server (IPTV-AS) retrieves an IPTV user profile associated with the user from a Home Subscriber Server (HSS) of the IMS network, and provides the IPTV user profile to the ITF. The ITF then implements access privileges and restrictions based on the IPTV user profile, such as allowing access to subscribed premium channels, blocking access to non-subscribed or restricted (*e.g.,* adult) channels, and the like. The IPTV user profile may additionally include information, such as past viewing habits, hobbies, and the like, that further personalizes the IPTV experience for the user.

A regular IMS-based IPTV service provision scenario happens in a home environment, for example. Within a home, there may be an IPTV subscription for the home, and multiple users associated with that subscription (e.g. Dad, Mom, and sons). When the ITF in the home is powered on, the IPTV Subscriber Identity Module (ISIM) in the home IPTV gateway (IG) registers with the IPTV-AS and the credentials stored in the ISIM are used, via normal IMS procedures, to verify that this is a valid subscription. The ITF is at this time configured for a 'default user' (which may be also one of the registered users, e.g. Dad). An individual member of the household can do various personalization of the TV experience by further using a username/password to register himself as a specific user within the subscription. Thus, a user may log on with the ITF so that a personalized channel list and associated electronic program guide may be applied, for example, to enhance the user experience.

However, when the IPTV users roam outside their home environment and desire to have IPTV service via another (non-home) ITF, no IPTV service personalization can be provided using today's implementations. For example, instances arise when a roaming user desires to be provided IPTV services from a generic ITF. However, even if the user has a valid and personalized IPTV subscription, there is no manner today that the user profile can be enforced from the generic ITF when the user roams. This reduces the appeal of the IPTV service for the users and as a consequence hinders the network operators' revenues.

Other problems of the prior art implementations stem from the typical separation of user's access subscriptions in the accessed networks. For example, in most implementations, the user's IMS subscription is separated and apart from the IPTV subscription. Likewise, in many implementations, the IPTV subscription is also separate and apart from the user's non-IMS subscriptions, such as for example, the user's 2G mobile subscription or the ordinary fixed-line Plain Old Telephone Service (POTS). This results in cumbersome multiple necessary registration for the user to access the desired IPTV service. For example, when a user subscribes for IMS service with a network operator, an IMS user subscription is created in the HSS of that network, which stores user information such as for example the user's personal data (e.g. user's name, address, credit information) along with service related data (e.g. the user's allowed network services, such as voice, data, internet access, VoIP, chat, file transfer, etc). When the IMS user then accesses the IMS network, the information from the IMS user subscription is used to authenticate the IMS user in order to grant network access and provide the allowed IMS service(s) according to the user profile information. When the user also subscribes to IPTV service, an IPTV subscription is further created for that user. When the user of an IMS-based IPTV service accesses the IMS network to request IPTV service, the information from the IPTV user subscription is further used to authenticate, again, the IMS user in order to grant network access and provide the requested IPTV service.

Although there is no solution as the one proposed by present invention, the US patent publication US 2008/0127255 in the names of Ress et al., bears some relation with the field of the present invention. In this publication, IPTV services are provided to different types of subscriber devices over different types of networks via an IP multimedia subsystem (IMS). The IMS architecture containing an instance of such a multimedia subsystem, provides certain services to applications and devices. A given subscriber may have one subscription supporting IPTV services on different types of subscriber devices. Each subscriber device may register with the multimedia subsystem to receive service from a given IPTV application server, and the interaction between the various subscriber devices and the IPTV applications may use SIP. However, the US patent publication US 2008/0127255 stops short of teaching or suggesting the present invention.

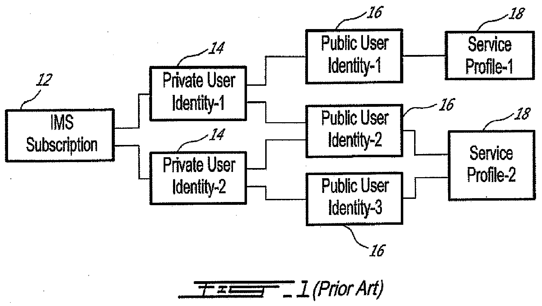

Furthermore, although there is no solution as the one proposed by present invention, the 3GPP Technical Specification 23.228 Release 7 (v.7.4.0, which full name is "3rd Generation Partnership Project; Technical Specification Group Services and System Aspects; IP Multimedia Subsystem (IMS); Stage 2, (Release 7), published in June 2006, also bears some relation with the field of the present invention. In this technical specification, there is shown a structure of an IMS subscription that can include references to data services. Such a subscription 12 is shown in Figure 1 (Prior Art), wherein the IMS subscription 12 may contain one or more Private User Identities 14, one or more Public User Identities 16, each being connected to a service profile 18. However, the 3GPP technical specification stops short of teaching or suggesting any use of the suggested association between the IMS subscription 12 and the service profile 18 as disclosed in the present invention.

The patent publication WO 2007/131548 A1, bears some relation with the field of the present invention. This publication teaches a method for establishing a secure communication channel between a mobile terminal (MS) and a SIP server for the purpose of controlling one single IPTV service. The method comprises sending from the MS to the SIP server a SIP request with a P-Asserted-Identity via the IMS network. At the SIP server (14), access to the IPTV service is authorized on the basis of said P-Asserted-Identity and, upon successful authorization, a security token is sent to the MS via the IMS network. The SIP server and the MS use said security token to establish a secure communication channel between each other.

The US patent publication US2007/140493 A1 also bears some relation with the field of the present invention. In this publication, data traffic between a mobile radio network and an IMS network is secured by first authenticating a mobile subscriber in the mobile radio network and in the IMS network. Next, an examination is carried out to check whether the identity of the mobile subscriber authenticated in the IMS network corresponds to the identity of the subscriber authenticated in the mobile radio network and, if so, a message is sent from the IMS network to the mobile subscriber and data is exchanged between the mobile subscriber and the IMS network by a security protocol protected by a common key derived from the message.

### Summary

According to the present invention there is provided a method for accessing services in a telecommunications network according to Claim 1.

Furthermore, the present invention provides a user equipment according to Claim 5.

Optional features of the present invention are set out in the dependent claims.

### Brief Description of the Drawings

For a more detailed understanding of the invention, for further objects and advantages thereof, reference can now be made to the following description, taken in conjunction with the accompanying drawings, in which:
Figure 1 (Prior Art) is a high level representation of a known 3GPP implementation of a user IMS subscription;
Figure 2 is an exemplary high level representation of a preferred embodiment of the invention;
Figure 3 is a high level representation of an exemplary implementation of a user subscription based on the preferred embodiment of the invention;
Figure 4 is a high level representation of another exemplary implementation of a user subscription based on the preferred embodiment of the invention;
Figure 5 is another high level representation of another exemplary implementation of a user subscription based on the preferred embodiment of the invention;
Figure 6 is an exemplary nodal operation and signal flow diagram of a possible implementation of the preferred embodiment of the present invention;
Figure 7 is an exemplary nodal operation and signal flow diagram of a possible implementation of the preferred embodiment of the present invention;
Figure 8 is an exemplary block diagram of the preferred embodiment of the present invention implemented in a terminal; and
Figure 9 is another exemplary block diagram of the preferred embodiment of the present invention implemented in an HSS.

### Detailed Description

In order to provide background information for obtaining a better understanding of the present invention there is described:

In one aspect, a method for accessing services in a telecommunications network. The method starts by registering a user with a network for a provision of a first service defined in a user subscription of a Home Subscriber Server (HSS) of the network. The HSS then determines a second service associated with the user, and the user is returned from the HSS a security token associated with the second service, the security token being for use in accessing the second service.

In another aspect, is another method for accessing services in a telecommunications network. According to this method, a User Equipment (UE) registers with a telecommunications network for a provision of a first service. Then the UE receives a security token associated with a second service of the user, the security token being for use in accessing the second service.

In yet another aspect, is an HSS comprising a processor and a subscription database including a user subscription of a user for a first service. The HSS further comprises a communication interface receiving a user registration request for registering the user for a provision of the first service defined in the user subscription. The communication interface further receives a request for a security token associated with a second service of the user. The processor authorises the request for the security token and generates the security token associated with the second service, and the communication interface returns to the user the security token for use in accessing the second service.

In yet another aspect, is a UE comprising a processor, a communication interface, and a data repository storing instructions that when executed by the processor cause the communication interface to register the UE with a telecommunications network for the provision of a first service defined in a user subscription. The UE then receives from the telecommunications network a security token associated with a second service of the user.

According to an exemplary aspect, the first and second user services may include IMS (IP Multimedia Subsystem access) and IPTV (IP Television) respectively.

According to another example, a technique is proposed by which users can access their personalised home IPTV service when away from home, such as for example when traveling. The technique is simple and may be implemented with a mobile subscription tied to an IPTV subscription. For example, implementing the technique described herein would allow a large nationwide hotel chain to advertise the fact that the hotel allow its guests to access their personalised home IPTV subscription, provided by a partner IPTV service provider, from the TVs in their hotel room.

Let's say that a national hotel chain has a business agreement with a national IPTV service provider to allow its guests to get access to their home IPTV subscription from their hotel rooms. Users don't have to carry the ISIM for their IPTV subscription or require a hotel TV/set-top box to have a slot for inserting ISIMs for their IPTV subscription. (The ISIM is the physical token by which the user can carry the credentials for his IPTV subscription with him, which, in turn, allows him to personalize his IPTV services to his preferences.) The only pre-requisite is that the hotel has access to the IPTV service provider's IMS network, and the user has a mobile with a regular (2G or 3G) multimedia telephony subscription.

The exemplary use case may be as follows: The user turns on to the TV in the hotel and one of the choices offered is a 'Your Personal TV on the main menu. The user clicks on this and is provided with an entry box for a PIN (Personal Identification Number) Code. Meanwhile, the user chooses a 'Remote Access to Home TV application on his mobile phone, which contacts the operator and returns him the PIN code. The user enters the PIN code on the ITF (either manually, or remotely via the infrared or Bluetooth capabilities on the mobile and the corresponding capability in the ITF) and is connected to his home (i.e., personalized) Electronic Program Guide (EPG). He continues to interact with the ITF as if he were at home, i.e., his preferences are reflected in his viewing experience.

This takes advantage of the user's mobile (2G or 3G) as a way of tying the user's mobile subscription to the user's IPTV subscription, and of the presence of the mobile as a secure way to authenticate the user and tie the user to a particular device (the hotel TV) for the consumption of IPTV services. The following describes embodiments of the present invention:
The innovative teachings of the present invention will be described with particular reference to various exemplary embodiments. However, it should be understood that this class of embodiments provides only a few examples of the many advantageous uses of the innovative teachings of the invention. In general, statements made in the specification of the present application do not necessarily limit any of the various claimed aspects of the present invention. Moreover, some statements may apply to some inventive features but not to others. In the drawings, like or similar elements are designated with identical reference numerals throughout the several views.

Currently there is no standard way to maintain a relationship between different subscriptions for the same user in the operator's HSS, nor is there any manner for taking advantage of a user's first registration with the network for the provision of a first service to facilitate the provision of a second service based on the same registration. At best, the prior art teaches how to define plural IMS-based user services 18 for the same user IMS subscription 12, as previously shown with relation to Figure 1 (Prior Art). A user can have multiple services (e.g., 2G mobile subscription, a fixed-line telephony subscription) which are not IMS-based, as well as IMS services, all of which subscription information has to be retained in the operator's HSS.

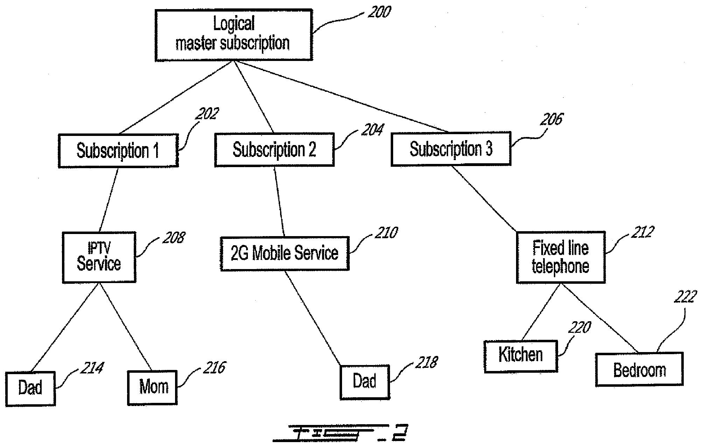

According to the present invention, such a relationship between different subscriptions can be maintained by a service provider, so that whenever a user registers with the network for a given first service, the HSS can determine another second service (possibly upon user request) and return to the user a security token associated with the second service allowing the user to access that service. This relationship may be maintained in the operator's HSS as the HSS is the logical database for all the user subscriptions of a network. This concept is illustrated in Figure 2, which shows an exemplary high level representation of a preferred embodiment of the invention wherein a user has, for example three (3) subscriptions 202, 204, and 206 defined under the umbrella of a master subscription 200, the subscriptions 202, 204, and 206 giving access to the user, respectively, to IPTV service 208, to a 2G voice mobile
telephony service 210, and to a fixed-line telephony service 212. The logical master subscription 200 may also associate the services 208, 210, and 212 with several users 214, 216, 218, 220, and 222, such as for example dad and mom for IPTV service 208. It will be understood that while for simplicity purposes the text refers to 'dad' and 'mom', all users linked to the subscription 200 are typically identified using their registered username.

Connecting using a logical master subscription a first and second user services can have several advantages. One of these advantages is to simplify the registration mechanism for the user, such as that when the user connects and registers to the network for accessing a given first service, access to a second service can also be provided without necessitating a further standalone registration for the second service. This may be important in certain roaming scenarios when the user may not have access to the necessary credentials embedded in his home ITF, for example, to access the IPTV service.

Accordingly, there is another object of the present invention to allow a roaming IPTV user to have access to a personalised IPTV service even when not connecting for IPTV service via his/her home ITF. For example, in a normal IMS-based IPTV service provision scenarios, within the user's home, there is no need for the user to do anything for the network to verify that he is a valid subscriber or belongs to a valid IPTV subscription. When the systems in the home are activated (powered on), the ISIM in the IPTV home gateway registers with the IMS-IPTV application server and normal IMS procedures verify that this is a valid subscription. The ITF is at this time configured for a 'default user', and an individual member of a household can do various personalization of the TV experience by using a username/password to register himself as a specific user within the subscription. According to the an object of the invention, in an IPTV roaming scenario, the invention allows for a roaming IPTV user to use his valid mobile IMS subscription, or his mobile 2G subscription, in order to first register with the IMS (or 2G network) via his mobile terminal, and obtain a security token associated with his home IPTV subscription in order to register the remote ITF with the networks if it were a part of his personalized, IPTV service.

It is yet another object of the present invention to make use of the same security token so as to enable a roaming IPTV user to perform parental control, i.e. to gain access, remotely, to his IPTV subscription in order to manage information obtainable via the subscription, such as, for example, to see if other users associated with the subscription (e.g. his sons) are currently watching TV, and, if so, what TV programs are currently being watched, and possibly to terminate the programs if he so desires.

In an exemplary scenario illustrative of a preferred embodiment of the invention, a user can get access to a second service when registering with the network for a first service. For example, when a user registers with the network for the provision of IMS service, that user can be registered and authenticated for IMS service, and additionally, to be returned (e.g. upon user request) a security token for obtaining also IPTV service, when the HSS determines that IPTV service is also part of the user's subscription, or when the HSS has linked user subscriptions for both IMS and IPTV services. In fact, the user may through such tokens access any other service for which there are linked subscriptions maintained in the HSS.

For example, with relation to the above-mentioned exemplary scenario, an IMS user may want to have IPTV access from an ITF terminal in a hotel room using his own, personal, IPTV profile (in order for example to have access to his personalised program listing and program guide). For the hotel ITF to be considered a part of the guest's (i.e., the user's) own subscription during service delivery, the user should be able to prove that he is indeed the authorized subscriber of the operator's IPTV service. This may be accomplished as follows. The user accesses a 'Remote Access to Home TV' application on his personal cellular phone, to acquire a security token from the network provider for accessing his IPTV subscription. (If the user's phone is IMS-enabled, i.e., a 3^{rd} Generation, 3G, phone, it is assumed that the phone has previously registered with the IMS network for access to the user's 3G services.) The service provider uses the IMS mobile subscription of the user (or the 2G network registration) as a registration entry point into the user's HSS to deduct and identify the user's IPTV subscription, as the multiple subscriptions are linked together under a single logical umbrella (e.g. the logical master subscription 200). Alternatively, the IMS subscription may include an indication that the IPTV service is allowed for the subscriber. A security token associated with the user's IPTV service is returned to the user via his mobile terminal, who then submits the token to the hotel's ITF, which, in turn, transmits the security token to the user's IPTV service provider. The IPTV service provider submits this security token for validation to the HSS, which may maintain a binding created by this token between the mobile subscription and the IPTV subscription. Having verified that the user is indeed a valid IPTV subscriber, the only remaining item is for the user to assert his IPTV user identity (typically via a user name and password) which is entered into a IPTV login screen returned to him at the hotel's ITF. The information needed to validate the username/password is returned to the hotel IMS Gateway (IG) by the IPTV service provider after validating the token, so that personalised IPTV service can be provided to the user.

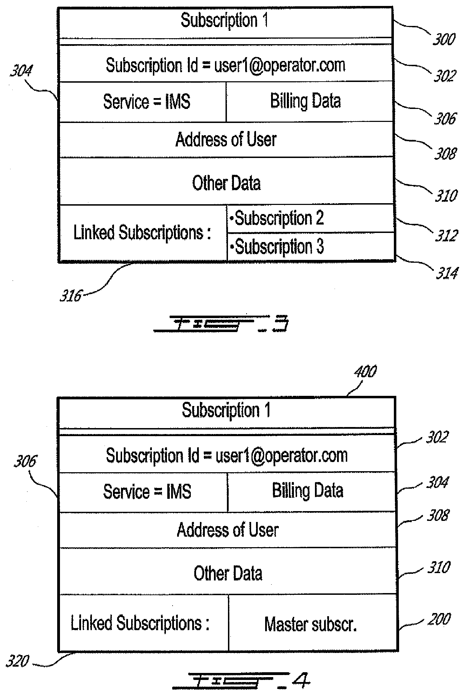

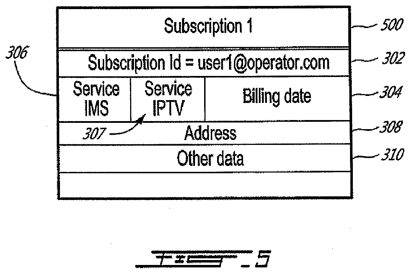

Exemplary user subscriptions stored in the HSS are shown in Figures 3 and 4. In Figure 3, a simplified exemplary user subscription 300 is shown comprising an identifier that can take the form of a person's username 302, an indication 304 of the subscription service, e.g. IMS service, billing data 306, the address of the user 308, other subscriber data 310, and a section 316 directed to other linked subscriptions 312 and 314. Such linked subscriptions may comprise, for example, an IPTV subscription 312 of the same user. Another example of a user subscription 400 is provided in Figure 4, which has a similar structure as the subscription 300 of Figure 3, except for the fact that the section 316 referring to other linked subscriptions for the same user points to the master subscription 200 (as presented in Figure 2), so that the link to the other user's subscriptions is made via the master subscription 200. Another example of a user subscription 500 is provided in Figure 5, which has a similar structure as the subscription 300 of Figure 3, except for the fact that besides the first IMS service associated with the user, the subscription 500 further contains an indication for a second IPTV service 307 for the user. In the present case, thus the subscription 500 contains indication that the user is authorised both the IMS service 306 and the IPTV service 307.

Alternatively, in another example, the two services identified at 306 and 307 in Figure 5 may include 2G voice access via e.g. a GSM subscription and IPTV service, respectively.

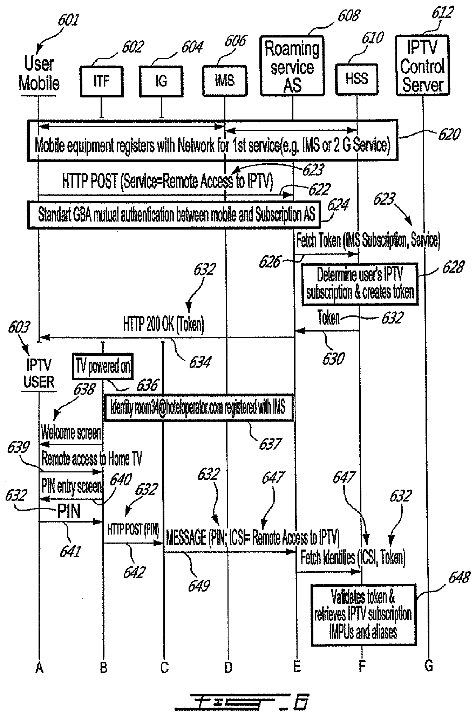

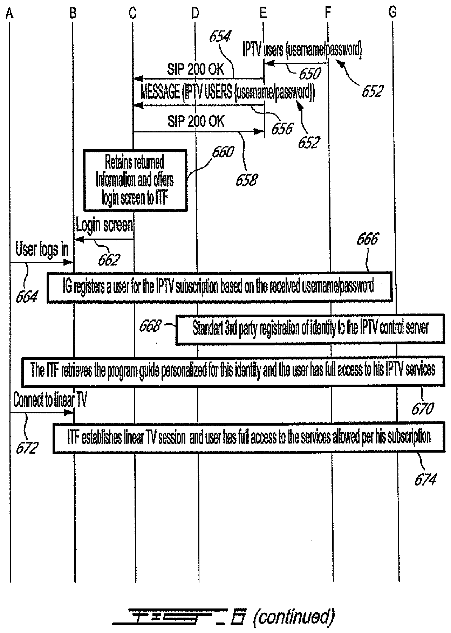

Reference is now made to Figure 6, in which there is shown an exemplary nodal operation and signal flow diagram according to a preferred embodiment of the invention. Shown in Figure 6 is an IMS/IPTV network 600 comprising a user terminal 601 (also called herein interchangeably User Equipment, or UE) that can take the form of a wireless PDA, a mobile phone, a smart phone or the likes. The network 600 further comprises an ITF 602 (also called sometimes an OITF - the Open IPTV Forum specified ITF, whose specifications include details of how the OITF (or ITF) interacts with the IMS gateway and the network; OITF and ITF are used interchangeably hereafter) for providing IPTV service. For the sake of the present exemplary scenario, it is assumed that the ITF 602 is not the home ITF for the user. The ITF 602 is connected via appropriate communication interfaces (as described by the Open IPTV Forum specifications), to an IMS-IPTV gateway (IG) 604 whose main function is to mediate the interactions between the ITF and the service provider's IMS network, and which connects further to the IMS core network 606. A Roaming Services Application Server (AS) 608 provides the application that mediates access to those services which can be authorized using the authenticated mobile phone subscription as an entry point to the logical master subscription in the HSS in the manner described earlier. Finally, the network 600 comprises an HSS 610 storing user profile data, and an IPTV control server 612 that controls access to the IPTV content provided for user terminals alike user terminal 601. In the exemplary scenario described in Figure 6, it is assumed that the same user can connect to the IMS network either via the user mobile 601, or via the ITF 602 (for the provision of IPTV service), or both.

The remote user first registers with his user terminal 601 with the network for obtaining a first type of service, such as for example IMS service or 2G service, action 620, presumably when he powers on the mobile equipment. This is a well known 3GPP procedure that also requires the HSS' participation in verifying the user credentials associated with the first service's registration. This procedure may be performed according to the 3GPP Technical Specification (TS) 23.228, called'IP Multimedia Subsystem (IMS); Stage 2', and TS 24.229, called 'Internet Protocol (IP) multimedia call control protocol based on Session Initiation Protocol (SIP) and Session Description Protocol (SDP); Stage 3', which are herein included by reference in their entirety. In the case of 2G mobile telephony, e.g. GSM access, the registration procedure is also well known. Action 620 may include receiving from the mobile terminal 601 a user registration request by the HSS 610, via the IMS network 606, and registering the user with the network for the provision of the first service defined in the user subscription stored in the HSS 610.

Then the user desires to obtain a security token for accessing a second service, such as for example personalised ITPV service. For example, the user may be located in a hotel, where he would normally only receive IPTV access based on the hotel's default ITF profile. In order to access his own personalised IPTV service, the user may use his mobile terminal 601 and send, action 622, an HTTP (Hyper Text Transfer Protocol) request to the Roaming Services AS 608 requesting a security token associated with the second service (e.g. the IPTV service). The request includes the name 623 of the second service the user wishes to access, set, in the present exemplary use case, to 'remote access to IPTV'. In action 624, the mobile terminal performs a standard GBA (Generic Bootstrapping Authentication) authentication, as disclosed for example in the 3GPP Technical specification 33.220, via the IMS network and acquires the necessary credentials so as to be able to mutually authenticate to the Roaming Services AS 608. This is also a known 3GPP procedure. Then, the Roaming Services AS 608 contacts the HSS 610 with the user's mobile identity and the requested service 623 in order to acquire the security token that may establish a binding between the user's IMS subscription (first service) and the user's IPTV subscription (the second service). In action 628, the HSS 610 may determine the second service associated with the user, by making use of the user's mobile identity as a logical entry point into the user's mobile subscription and, by traversing the link from this subscription (204 in Figure 2) via the logical master subscription (200 in Figure 2), in order to find the IPTV subscription that is associated with this user. Thus, by registering and authenticating the user for the provision of the first service (IMS) action 620, the HSS 610 may deduct that the user has a legitimate IMS subscription, and by linking the IPTV subscription to the IMS subscription, the HSS 610 further deducts that the user is a legitimate IPTV user. In actions 630 and 634, the user is returned the IPTV security token 632 associated with the second service. For example, the token may be in the form of a numeric PIN code destined to the user, as this may be easy to enter using an ITF's remote control. The user being now provided with the security token relative to his own personalised IPTV subscription, he may now enter it on the hotel's ITF in order to be granted personalised IPTV service. Referring further to the security token, it may also have a limited lifespan for protection against fraud (e.g. when the token expires, the user has to request a new token).

The remote user turns on e.g. the hotel TV, action 636, which contains the hotel's ITF 602. The ITF 602 registers with the IMS network 600 using, for example, the default hotel room's identity, such as for example room347@hotel.operator.com, action 637. This identity is allocated to the user by default on the hotel's ITF 602 until the user enters a different identity for remotely accessing his home IPTV subscription. One of the options on the hotel ITF's TV welcome screen displayed in action 638 for the IPTV user 603 is a 'Remote access to home TV', which is selected by the IPTV user 603 in action 639. Upon selection of the application, the ITF 602 returns to the user, in action 640, a field for entering a user security token, which is performed in action 641. When the user enters the received security token 632, (e.g. the PIN code), action 641, the ITF 602 transfers the token 632 to the IG 604 using, for example, an HTTP POST message 642, and the IG 604 further sends a SIP MESSAGE 644 to the Roaming Services AS 608 that includes the token 632, as well as the ICSI 647 (IMS Communication Service Identifier) set to 'IPTV' in order to identify the IPTV subscription as the requested application. The Roaming Services AS 608 sends a request to the HSS 610 to return the identities and user credentials associated with the IPTV subscription identified by the ICSI 647 for the user who is the holder of the token 632.

In action 648, the HSS 610, as the creator of the security token 632 (as shown in previously described action 628), can validate the validity of the token and use it to identify the IPTV subscription specified in the ICSI 647. The HSS 610 is able to further determine all the IPTV user identities associated with the IPTV subscription, and the security credentials 652 associated with these user identities (e.g. usernames/ passwords), which are returned from the HSS 610 to the Roaming Services AS 608 in action 650. A 200 OK message 654 is returned to the IG 604 as a response to the SIP MESSAGE 644, to confirm the AS 608 properly received the user credentials 652.

A SIP MESSAGE 656 is further sent to the IG 604, containing all the user credentials 652 associated with the IPTV subscription, including the username/passwords by which individuals in the subscription identify themselves. The receipt of this message is acknowledged with a SIP 200 OK 658.

The IG 604 retains the information regarding the user identities from the incoming message 656, action 660, and creates a screen on the ITF 602 that allows the user to select the user identity he wants to use for his personalised IPTV session, action 662. For example, in action 664, the user logs in, i.e. the user selects e.g. 'Dad' as a username and enters the associated password, just as he would have done at his home ITF.

What follows are standard procedures for IMS based IPTV as defined by TISPAN (Telecom and Internet Converged Services and Protocols for Advanced Networks) and the Open IPTV Forum, such as for example in the specifications ETSI (European Telecommunications Standards Institute )TS 182 027, called 'IPTV Architecture; IPTV functions supported by the IMS subsystem'; and ETSI TS 183 063, called 'Telecommunications and Internet converged Services and Protocols for Advanced Networking (TISPAN);IMS-based IPTV stage 3 specification;' andOpen IPTV Forum Release 1 Specifications,, all of which are herein included by reference. The ITF 602 forwards in action 666 the user registration information (e.g. username and password) in a HTTPS message (HTTP over SSL, or HTTP Secure, is the use of Secure Socket Layer (SSL) or Transport Layer Security (TLS) as a sub-layer under regular HTTP application layering, where HTTPS encrypts and decrypts user requests and responses in order to protect for example against eavesdropping and man-in-the-middle attacks) to the IG 604, which chooses the appropriate user subscription for this username and registers this user subscription with the IMS network. In action 668 takes place a 3^{rd} party registration to access the allowed IPTV services for this user identity. Further in action 670, upon a successful 3^{rd} party registration in action 668, the personalized electronic program guide (EPG) is sent to the ITF 602, so that the user can have personalised IPTV services. For example, the user can browse the EPG, and select from available IPTV programs and services. Assuming the user selects linear TV (live television), action 672, an IMS session for linear TV is set up, action 674, and the user can experience the IPTV service exactly as he would on his home ITF.

According to a variant of the preferred embodiment of the invention, instead of using a SIP MESSAGE in action 644 of Figure 6, one may chose to use HTTP for the exchange of the security token 632 and for the requested IPTV service 647. For example, after action 642, an HTTP message 644' (instead of the shown SIP MESSAGE 644) can be sent out from the IG 604 to the Roaming Services AS 608. However, this may require the IG 604 to support the 3GPP GBA authentication (which is a security mechanism designed to allow devices, like the IG, that are un-trusted by the service provider, to access network elements like the Roaming Services AS), as defined in the specification 3GPP 33.200, called 'Generic Authentication Architecture (GAA); Generic bootstrapping architecture', all of which is herein included by reference.

According to yet another variant of the preferred embodiment of the invention, instead of using a SIP MESSAGE in action 656 of Figure 6, one may also chose to use HTTP for the exchange of the user credentials 652. According to this variant, the network does not use a SIP MESSAGE to the IG 604 to carry the required information, as in Figure 6. Rather, the network uses the Broadband Forum's Technical Reference-69 (TR-69) technique (which is a protocol by which a service provider can configure and update devices like gateways and home networking devices) to forward the user information to the IG 604. According to this variant, an HTTP POST message coded as per TR-69 is sent from the Remote Services AS 608 to the IG 604, which carries the user credentials 652. The IG returns a 200 OK in response. The remaining steps are as detailed hereinabove in relation to Figure 6. One advantage of this option is that it is more secure. The user identities and credentials 652 for the IPTV subscription, which remain in the IG 604, can be erased by the network at some later point in time (again using TR-69 for this purpose). Thus, when the user logs out, or when the security token 632 expires, the network can discard this information so that there is no misuse of this ITF by a subsequent guest.

According to a further variant of the preferred embodiment of the invention, the order of the messages shown in Figure 6 may be changed. For example, in this variant the login procedure shown in action 664 may be performed concomitantly with action 640, so that the IPTV user can input his username/password at the same time as inputting the security token on the remote ITF 602. In this example, the combined token 632 and login information can be sent together from the ITF 602 to the HSS 610, so that the later can validate in action 648 both the token 632 and the submitted username and password. In such a scenario, the message 650 no longer needs to carry the usernames associated with the IPTV subscription, and actions 660, 662, and 664 can be skipped, so that actions 666 and subsequent are performed without user intervention (as in previous actions 664).

According to another embodiment of the invention, the security token and the linked subscriptions may also be used for the purpose of IPTV parental control. One aspect of parental control is to allow parents a wider choice of ways to oversee what programs children are allowed to watch - and when. Obviously, this is of particular importance when parents are away from home.

For example, when children are watching a program, it should be possible for their parents to remotely monitor, using a device such as a PC or a mobile phone, what program the children have selected or are currently watching - and if necessary, in extreme situations for example, be able to shut it down. For example, the children have turned on the news, and a parent becomes aware there might be violent pictures shown from a major accident. The parent sees that the news about the accident is going to be streamed, or ongoing, and can, over the network, shut down the ITF displaying that program until he/she comes home. A parent may also be able, using this feature, to ensure that the allowed times for watching TV are maintained. When away from home, parents can check, using their mobile phone, what the children are watching at home. Using the mobile phones that are tied to their IPTV subscription for this request, they are able to obtain information about the watched program on a particular ITF or all ITFs in the home. They receive a response on their mobile phone detailing the program information for the content being watched at the moment on one or all ITFs in the home, and if necessary, can take appropriate actions.

The present invention allows using the previously described security token also for the purposes of parental control. For example, a user may use his IMS subscription to register successfully with an IMS network and request from the network, more specifically from the HSS, the security token to access the services he desires from the IPTV subscription. The token allows the network to authorize the service access for the user. Without the token the user would not have access to features of the IPTV service (such as the remote parental supervision service) from his mobile, given that he is registering in the network using his IMS subscription. The token is the proof-of-possession that allows the network to bind the IMS subscription to the IPTV service for the purpose of enabling the remote parental supervision service requested by the user.

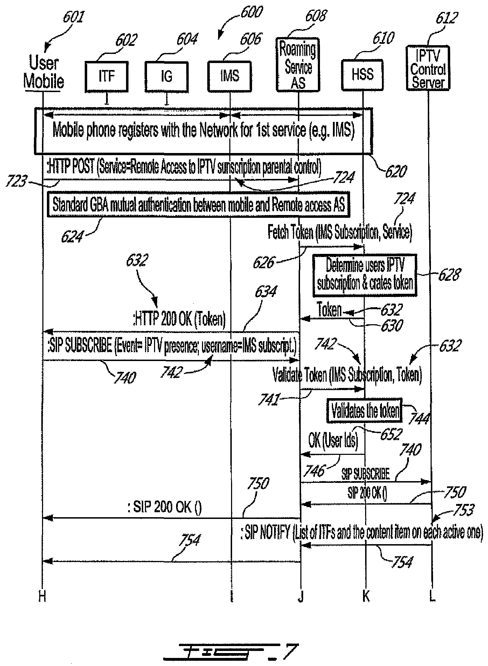

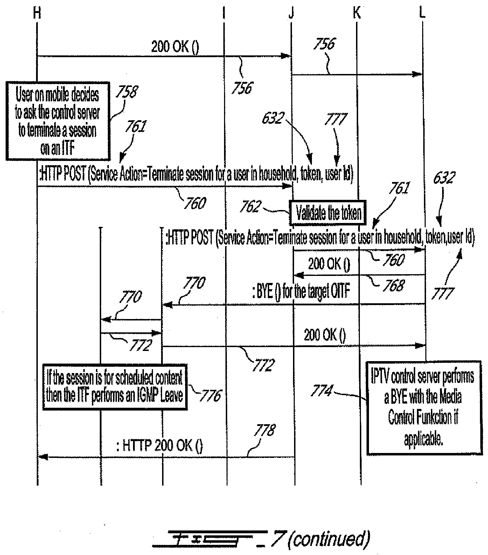

Reference is now made to Figure 7, which is another exemplary nodal operation and signal flow diagram for the previously described network 600 comprising elements similar to those already described with relation to Figure 6. Actions 620 - 634 of Figure 7 are also analogous to those corresponding actions described in Figure 6, except for the fact that in Figure 7 the HTTP POST message 622 of Figure 6 is replaced by the HTTP POST message 723 that requests access to the parental control service 724 instead of the remote access to IPTV service 623. In Figure 7, the user mobile is assumed to be an IMS mobile terminal 601 that registers in action 620 for IMS service with the network 600.

Subsequently, once the security token 632 is obtained by the user in action 634, the application in the user's mobile 601 may send a SIP SUBSCRIBE request message 740 to the Roaming Services AS 608 to subscribe to an IPTV presence event package that provides presence information for the IPTV subscription, e.g. for all the active IPTV users in the household. The request 740 includes the security token 632 received in the previous step, and an indication 742 of the user's IMS subscription. Via the message 740, the user registers his interest in being notified of any update regarding the IPTV subscription, such as for example when other users (e.g. his kids) associated to the same IPTV subscription start watching TV. The Roaming Services AS 608 sends the security token 632 and the indication 742 to the HSS 610 for validation in action 741, and the HSS 610 validates the token in action 744. The AS 608 then receives from the HSS 610 the identities of users associated with the IPTV subscription referred to by the token. For example, such identities may include the usernames of the kids associated with the IPTV subscription.

The Roaming Services AS 608, then performs any necessary modification to the SIP SUBSCRIBE message 740 and forwards the SUBSCRIBE message 740 to the IPTV control server 612. This modification may be needed for the IPTV control server 612 to accept the incoming SIP SUBSCRIBE message 740. The IPTV control server 612 confirms safe receipt of the message 740 via the return of a 200 OK message 750 to the remote AS 608, which, in turn, forwards the 200 OK to the user mobile 601.

The IPTV control server 612 then responds to the SUBSCRIBE message 740 and sends a SIP NOTIFY message 754 to the Roaming Services AS 608 which includes a list 753 of all ITFs in the households (associated with the IPTV subscription) and what they are currently watching. The Roaming Services AS 608 forwards the NOTIFY message 754 to the mobile user 601. The mobile user then confirms receipt of the NOTIFY message 754 with a 200 OK message 756 which is forwarded back to the IPTV control server 612.

After looking at the information regarding the currently active IPTV users, the user decides whether or not he wants to take any action, e.g. to terminate a session for any ITF linked to the IPTV subscription. If so decided in action 758, an application on the mobile 601 may send an HTTP POST request message 760 to the Roaming Services AS 608 that possibly includes a command for one or more of the active ITFs and the security token. For example,the requested service action or command 761 is included in message 760 (e.g. terminate ITF IPTV session), along with the security token 632 as a proof of legitimacy and authority for such command, and further along with the user identity 777 whose IPTV session is to be terminated. The AS 608 again validates the security token 632 with the HSS 610, action 762, and when the token is validated, the Roaming Services AS 608 forwards the request 760 to the IPTV control server 612, which confirms safe receipt of the message 760 via a 200 OK message 768. The later proceeds in action 770 with the requested termination of the IPTV session related to the identified user 777 by sending a SIP BYE to the ITF 602 associated with the user 777, through the IG 604. Then, the IG 604 responds to the request with a 200 OK message 772 confirming safe receipt of the message 770. Thereafter, the IPTV control server 612 may perform the same IPTV program termination to the other end of the IPTV session, action 774, if applicable. If the terminated IPTV session relates to scheduled IPTV media content, then the ITF 602 leaves the multicast channel, action 776. Finally, the Roaming Services AS 608 sends an HTTP 200 OK message to the mobile user 601 to report the successful termination of the IPTV session, action 778.

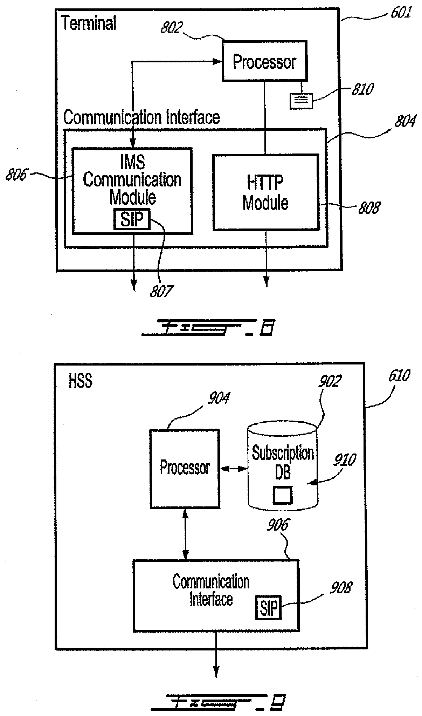

Figures 8 and 9 illustrate exemplary embodiments referring to a user terminal (or UE) 601, and an HSS 610, that can be used for the exemplary call scenarios described with reference to Figures 6 and 7.

With particular reference being now made to Figure 8, there is shown a user terminal (or UE) 601 that can be used to carry out the embodiments of the invention. For example, the user terminal 601 may comprise a processor 802, a communication interface 804 for carrying out communications with the network, and a data repository 810 storing instructions that when executed by the processor cause the communication interface 804 to send from the terminal 601 a user registration request to register the terminal with the telecommunications network for the provision of a first service defined in a first subscription. For example, the first user service may include the IMS service or a 2G mobile multimedia telephony service so that when the user terminal registers with the network it is provided IMS or 2G connectivity, as appropriate, as described hereinbefore with relation to Figure 6. The UE 601 further receives from the telecommunications network the security token 632 associated with a second service of the user and determined based on the user subscription. For example, the second user service may be the IPTV service as described hereinbefore, so that when the user terminal receives the security token, the user can use the security token as described hereinbefore in order to access the IPTV service, or get access to his IPTV subscription in order to perform parental control. The communication interface 804 may include an IMS communication module 806 including a SIP stack module 807 for SIP based communications, and an HTTP module 808 for carrying out HTTP based communications. It is based on the instructions stored in the data repository 810 that the processor 802 instructs the various communications interfaces to perform the communications described in relation to Figures 6 and 7 and that involve the user terminal 601. For example, the UE's communication interface sends out from the UE a request for the security token for the UE to receive the security token based on such instructions. Furthermore, the communication interface may send based on the same instructions the security token from the UE for the UE to be granted access to the IPTV service, and send a message comprising a command for one or more of the active ITFs along with the security token.

With particular reference being now made to Figure 9, there is shown an exemplary HSS 610 that can be used to carry out the embodiments of the invention. The HSS 610 may comprise a subscriptions database 902 including, for example, a first subscription 910 of a user for a first and second service. Such a first service may be for example the IMS service while the second service may be for example the IPTV service. The HSS 610 may further comprise a communication interface 906 for carrying out communication with external nodes. The interface receives a user registration request for registering the user for a provision of the first service defined in the user subscription, and further receives a request for a security token associated with a second service of the user. The HSS 610 further comprises a processor 904 that acts to authorise the request fort her token and to generate, using the first subscription 910, the security token 632 associated with the second service, wherein the communication interface 906 returns to the requestor the security token 632 for use in accessing the second service. The communication interface 906 may include a SIP stack module 908 for supporting SIP-based communication with external nodes.

Based upon the foregoing, it should now be apparent to those of ordinary skills in the art that the present invention provides an advantageous solution, which offers a simple yet flexible and efficient manner of accessing a second service, e.g. the IPTV service, when registering with a network for a first service, such as the IMS service or the 2G service. The invention allows to perform various tasks, such as for example IPTV connection from a remote environment, e.g. from a non-home ITF, or to perform parental control for IPTV users of a given subscription. Although the system and method of the present invention have been described with particular reference to certain type of messages and nodes, it should be realized upon reference hereto that the innovative teachings contained herein are not necessarily limited thereto and may be implemented advantageously in various manners. It is believed that the operation and construction of the present invention will be apparent from the foregoing description. While the method and system shown and described have been characterized as being preferred, it will be readily apparent that various changes and modifications could be made therein without departing from the scope of the invention.

## Claims

1. A method for accessing services in a telecommunications network, the method comprising the steps of:
- i. a User Equipment, UE, registering (620) with a telecommunications network for a provision of a first service defined in a user subscription of a Home Subscriber Server, HSS, of the telecommunications network;
- ii. sending out from the UE (601) a request for a security token (632) associated with an IP Television, IPTV, service associated with the user (723);
- iii. receiving at the UE (601) from the HSS a security token (632) establishing a binding between the user's subscription to the first service and the user's IPTV subscription, wherein the security token (632) is for use in accessing the IPTV service (634); and
- iv. receiving at the UE (601) a list of active IPTV Terminal Functions, ITFs, (753) associated with the IPTV service along with ongoing programming information for each active ITF of the list (754).

2. The method claimed in claim 1, wherein the first user service is an access to an IP Multimedia Subsystem, IMS, network (606).

3. The method claimed in claim 1 or 2, further comprising the step of:
- v. sending out from the UE a message comprising a command for one or more of the active ITFs, and the security token (760).

4. The method claimed in one of claims 1 to 3, wherein the security token comprises a Personal Identification Number, PIN.

5. A User Equipment, UE, comprising:
- a processor (802);
- a communication interface (804); and
- a data repository (810) adapted to store instructions that when executed by the processor (802) cause the communication interface (804) to register the UE (601) with a telecommunications network for the provision of a first service defined in a user subscription of a Home Subscriber Server, HSS, of the telecommunications network, and to further send out from the UE (601) a request for a security token (632) associated with an IP Television, IPTV, service associated with the UE (601), wherein the UE (601) is adapted to receive from the HSS a security token (632) establishing a binding between the user's subscription to the first service and the user's IPTV subscription for use in accessing the IPTV service, the communication interface (804) being further adapted to receive a list of active IPTV Terminal Functions, ITFs, associated with the IPTV service along with ongoing programming information for each active ITF of the list.

6. The UE claimed in claim 5, wherein the communication interface (804) is further adapted to send out from the UE (601) a message comprising a command for one or more of the active ITFs and the security token (632).

7. The UE claimed in claim 5 or 6, wherein the security token (632) comprises a Personal Identification Number, PIN, code.

## Patentansprüche

1. Verfahren zum Zugriff auf Dienste in einem Telekommunikationsnetz, wobei das Verfahren die folgenden Schritte umfasst:
- i. dass sich eine Benutzereinrichtung, UE, bei einem Telekommunikationsnetz für eine Bereitstellung eines ersten Dienstes anmeldet (620), der in einem Benutzerabonnement eines Heimat-Teilnehmerservers, HSS, des Telekommunikationssystems definiert ist;
- ii. Aussenden von der UE (601) einer Anforderung für einen Sicherheitstoken (632), der mit einem IP-Fernseh, IPTV,-Dienst assoziiert ist, der mit dem Benutzer assoziiert ist (723);
- iii. Empfangen an der UE (601) vom HSS eines Sicherheitstokens (632), der eine Bindung zwischen dem Abonnement des Benutzers für den ersten Dienst und dem IPTV-Abonnement des Benutzers herstellt, wobei der Sicherheitstoken (632) zur Verwendung zum Zugreifen auf den IPTV-Dienst (634) ist; und
- iv. Empfangen an der UE (601) einer Liste von aktiven IPTV-Endgerätefunktionen, ITFs, (753), die mit dem IPTV-Dienst assoziiert sind, zusammen mit laufenden Programmierungsinformationen für jede aktive ITF der Liste (754).

2. Verfahren nach Anspruch 1, wobei der erste Benutzerdienst ein Zugriff auf ein IP-Multimedia-Subsystem, IMS,-Netz (606) ist.

3. Verfahren nach Anspruch 1 oder 2, ferner umfassend den folgenden Schritt:
- v. Aussenden von der UE einer Nachricht, die einen Befehl für eine oder mehrere der aktiven ITFs und den Sicherheitstoken umfasst (760).

4. Verfahren nach einem der Ansprüche 1 bis 3, wobei der Sicherheitstoken eine persönliche Identifikationsnummer, PIN, umfasst.

5. Benutzereinrichtung, UE, umfassend:
- einen Prozessor (802);
- eine Kommunikationsschnittstelle (804); und
- ein Datenrepository (810), das so ausgelegt ist, dass es Anweisungen speichert, die bei Ausführung durch den Prozessor (802) die Kommunikationsschnittstelle (804) veranlassen, die UE (601) bei einem Telekommunikationsnetz für die Bereitstellung eines ersten Dienstes anzumelden, der in einem Benutzerabonnement eines Heimat-Teilnehmerservers, HSS, des Telekommunikationsnetzes definiert ist, und ferner eine Anforderung für ein Sicherheitstoken (632), der mit einem IP-Fernseh, IPTV,-Dienst assoziiert ist, der mit der UE (601) assoziiert ist, von der UE (601) auszusenden, wobei die UE (601) so ausgelegt ist, dass sie vom HSS einen Sicherheitstoken (632), der eine Bindung zwischen dem Abonnement des Benutzers für den ersten Dienst und dem IPTV-Abonnement des Benutzers herstellt, zur Verwendung beim Zugreifen auf den IPTV-Dienst empfängt, die Kommunikationsschnittstelle (804) ferner so ausgelegt ist, dass sie eine Liste von aktiven IPTV-Endgerätefunktionen, ITFs, die mit dem IPTV-Dienst assoziiert sind, zusammen mit laufenden Programmierungsinformationen für jede aktive ITF der Liste empfängt.

6. UE nach Anspruch 5, wobei die Kommunikationsschnittstelle (804) ferner so ausgelegt ist, dass sie von der UE (601) eine Nachricht aussendet, die einen Befehl für eine oder mehrere der aktiven ITFs und den Sicherheitstoken (632) umfasst.

7. UE nach Anspruch 5 oder 6, wobei der Sicherheitstoken (632) einen PIN (persönliche Identifikationsnummer)-Code umfasst.

## Revendications

1. Procédé pour accéder à des services dans un réseau de télécommunication, le procédé comprenant les étapes qui consistent :
- i. à enregistrer (620) un Équipement Utilisateur, UE, auprès d'un réseau de télécommunications pour la fourniture d'un premier service défini dans un abonnement d'utilisateur d'un Serveur d'Abonné Domestique, HSS, du réseau de télécommunication ;
- ii. à envoyer à partir de l'UE (601) une demande d'un jeton de sécurité (632) associé à un service de Télévision IP, IPTV, associé à l'utilisateur (723) ;
- iii. à recevoir au niveau de l'UE (601) à partir du HSS un jeton de sécurité (632) établissant une liaison entre l'abonnement de l'utilisateur au premier service et l'abonnement IPTV de l'utilisateur, où le jeton de sécurité (632) est destiné à être utilisé pour accéder au service IPTV (634) ; et
- iv. à recevoir au niveau de l'UE (601) une liste de Fonctions de Terminal IPTV, ITF, actives (753) associées au service IPTV conjointement avec des informations de programmation en cours pour chaque ITF active de la liste (754).

2. Procédé tel que revendiqué dans la revendication 1, dans lequel le premier service d'utilisateur est un accès à un réseau de Sous-système Multimédia IP, IMS,(606).

3. Procédé tel que revendiqué dans la revendication 1 ou 2, comprenant en outre l'étape qui consiste :
- v. à envoyer à partir de l'UE un message comprenant un ordre pour une ou plusieurs fonction(s) des ITF actives et le jeton de sécurité (760).

4. Procédé tel que revendiqué dans l'une des revendications 1 à 3, dans lequel le jeton de sécurité comprend un Numéro d'Identification Personnel, PIN.

5. Équipement utilisateur, UE, comprenant :
- un processeur (802) ;
- une interface de communication (804) ; et
- un référentiel de données (810) adapté pour stocker des instructions qui, lorsqu'elles sont exécutées par le processeur (802), amènent l'interface de communication (804) à enregistrer l'UE (601) auprès d'un réseau de télécommunication pour la fourniture d'un premier service défini dans un abonnement d'utilisateur d'un Serveur d'Abonné Domestique, HSS, du réseau de télécommunication, et pour envoyer en outre à partir de l'UE (601) une demande d'un jeton de sécurité (632) associé à un service de Télévision IP, IPTV, associé à l'UE (601), où l'UE (601) est adapté pour recevoir à partir du HSS un jeton de sécurité (632) établissant une liaison entre l'abonnement de l'utilisateur au premier service et l'abonnement IPTV de l'utilisateur destiné à être utilisé pour accéder au service IPTV, l'interface de communication (804) étant en outre adaptée pour recevoir une liste de Fonctions de Terminal IPTV, ITF, actives associées au service IPTV conjointement avec des informations de programmation en cours pour chaque ITF active de la liste.

6. UE tel que revendiqué dans la revendication 5, dans lequel l'interface de communication (804) est en outre adaptée pour envoyer à partir de l'UE (601) un message comprenant un ordre pour une ou plusieurs fonction(s) des ITF actives et le jeton de sécurité (632).

7. UE tel que revendiqué dans la revendication 5 ou 6, dans lequel le jeton de sécurité (632) comprend un code de Numéro d'Identification Personnel, PIN.
